Europäisches Patentamt

European Patent Office

Office européen des brevets

(19)

(11) Numéro de publication : **0 113 012**
**B1**

# (12) FASCICULE DE BREVET EUROPÉEN

(45) Date de publication du fascicule du brevet :
**03.12.86**

(21) Numéro de dépôt : **83111538.1**

(22) Date de dépôt : **18.11.83**

(51) Int. Cl.⁴ : **G 06 F 15/20**

(54) **Procédé et dispositif de traitement point par point d'images vidéo au cours d'un balayage tomographique et/ou comparaison d'images statiques.**

(30) Priorité : **24.11.82 FR 8219826**

(43) Date de publication de la demande :
**11.07.84 Bulletin 84/28**

(45) Mention de la délivrance du brevet :
**03.12.86 Bulletin 86/49**

(84) Etats contractants désignés :
**AT BE CH DE GB IT LI LU NL SE**

(56) Documents cités :
**PHYSICS IN MEDICINE AND BIOLOGY, vol. 21, no. 5, septembre 1976, pages 689-732, Londres, GB R.A. BROOKS et al.: "Principles of computer assisted tomography (CAT) in radiographic and radioisotopic imaging"**

(73) Titulaire : **Garcia, Edgard**
**Résidence La Pena Bâtiment 2 - Appt. 941**
**F-64600 Anglet (FR)**

(72) Inventeur : **Garcia, Edgard**
**Résidence La Pena Bâtiment 2 - Appt. 941**
**F-64600 Anglet (FR)**

(74) Mandataire : **Barre, Philippe**
**Cabinet Barre-Gatti-Laforgue 95 rue des Amidonniers**
**F-31069 Toulouse Cédex (FR)**

**0 113 012**

## Description

La présente invention concerne un procédé et dispositif de traitement point par point en temps réel d'images vidéo au cours d'un balayage tomographique réalisé par un tomographe conventionnel équipé d'un circuit vidéo fermé et d'un amplificateur de brillance soumis à l'effet de balayage.

On connaît les tomographes conventionnels permettant d'obtenir après balayage un cliché sur lequel les organes ou parties d'organes situés en dehors du plan de coupe sont flous se superposant à l'image nette de ceux situés dans le plan de coupe rendant ainsi l'interprétation difficile à cause de la faible résolution densitométrique, ce qui a pour effet de réduire considérablement l'intérêt de la tomographie conventionnelle sauf pour quelques examens bien spécifiques.

On connaît également les dispositifs de tomoscopie qui permettent d'obtenir des résultats similaires aux résultats de tomographie conventionnelle avec toutefois une réduction notable de la puissance de rayons X, ce genre de dispositif n'apporte pas d'amélioration au niveau de la qualité de l'image et/ou cliché par rapport aux tomographes conventionnels.

On connaît aussi d'autres dispositifs plus efficaces mais plus complexes tel que décrit dans le brevet FR-A-2 469 739, le dispositif décrit permet de réaliser à l'aide de deux caméras vidéo la comparaison de deux clichés tomographiques réalisés lors de balayages à géométrie différente, cette comparaison ne peut être effectuée qu'après la prise de deux clichés ce qui engendre un coût élevé dû au prix des films et d'autre part une perte de temps importante due en un premier lieu au développement des films et en second lieu au temps nécessaire pour la mise en marche du dispositif.

Le dispositif décrit dans le brevet FR-A-2 415 400 permet d'obtenir des images de couches d'objets tridimensionnels, il nécessite plusieurs sources de rayonnement X alimentées tout à tour, ce qui implique un générateur de rayons X pouvant alimenter successivement trois tubes d'où un coût extrêmement élevé pour un appareil limité dans ses possibilités d'utilisation. D'autre part, le nombre forcément limité d'incidences de rayonnement dû au fait que le nombre de tubes à rayons X ne peut à cause de leur volume atteindre des valeurs importantes, fait que l'effacement des parties situées en dehors du plan de coupe ne peut être que partiel, car les tubes ne se déplacent pas en cours d'opération.

D'autres dispositifs permettent d'obtenir des images de coupes d'objets tridimensionnels, ils utilisent divers moyens de mémorisation d'images, mais aucun des dispositifs ne réalise à la fois la suppression totale des flous sur l'image finale, l'effacement complet, par opposition à effacement par flou, de toutes les parties détectées comme étant situées en dehors du plan de coupe, après l'étude successive d'un grand nombre d'images (de douze à cent cinquante suivant le cas), l'obtention instantanée de l'image de la coupe en fin de balayage tomographique, la réduction de la dose de rayonnement encore inférieure à ce qu'elle est en tomoscopie (de un à trois pour cent par rapport à une tomographie conventionnelle), n'améliore la résolution densitométrique par rapport au film classique, ne permet une résolution en dimensions pouvant s'approcher considérablement de celle obtenue sur un cliché radiographique standard, ne peut s'intégrer à un ensemble radiologique existant composé d'un générateur et d'un tube à rayons X, d'un amplificateur de brillance couplé à un circuit fermé vidéo de télévision, d'un statif sur lequel est fixé le tube ainsi que l'amplificateur de brillance, muni d'un dispositif de tomographie dans lequel l'amplificateur de brillance décrit par rapport à l'objet à examiner un balayage similaire à celui du tube à rayons X, synchronisé et dans le sens opposé.

L'invention, telle qu'elle est caractérisée dans les revendications, a pour but de pallier aux inconvénients précédemment exposés.

D'autres avantages de l'invention ressortiront plus clairement de la description qui va suivre faite en regard du schéma joint.

Au début du balayage tomographique alors que le tube à rayons X est alimenté en régime de radioscopie, la première image formée sur l'écran de l'amplificateur de brillance est analysée par la caméra vidéo 1, les points de la première image vidéo sont convertis en données et/ou signaux binaires au moyen d'un codeur digital instantané 2 selon un découpage tel que le nombre de points vidéo de chaque ligne soit sensiblement égal au nombre de lignes analysées par image. Ces points sont instantanément mémorisés dans la cellule mémoire 3, lors de la formation de la seconde image alors que le tube et l'amplificateur de brillance se sont déplacés par rapport à l'objet. Pour chacun des points déterminés par le découpage au moyen de l'oscillateur pilote 4 et aux tops de synchronisation vidéo, une comparaison est réalisée par le comparateur de données 5 entre le niveau vidéo atteint lors de la première image déjà mémorisée et lors de la seconde, de sorte que chaque fois que le nombre binaire représentant l'amplitude vidéo du point analysé par la caméra 1 est supérieur à celui du point correspondant de l'image mémorisée, celui-ci chasse l'information antérieure de la mémoire 3 pour prendre sa place à la même adresse grâce aux compteurs binaires 6, le même processus se déroulant pour chaque point de chacune des images formées sur l'écran de l'amplificateur de brillance au cours du balayage tomographique, de telle sorte qu'en fin de balayage les données et/ou signaux mémorisés après conversion au moyen d'un convertisseur digital analogique 8 produisent une image finale au travers d'un moniteur TV 9 formée de points dont le niveau vidéo pour chacun d'eux aura été le plus élevé, permettant donc de détecter au cours de la formation des images successives, les ombres des parties traversées par les rayons X qui subissent un déplacement par rapport à l'écran de l'amplificateur de brillance ou des parties situées hors du plan de coupe afin de les éliminer au fur et à mesure de leur détection.

Il est à remarquer d'après l'analyse de fonctionnement que le temps imparti pour la prise en compte et le traitement des informations des données relatives aux amplitudes vidéo d'un point déterminé lors de plusieurs images successives est égal à :

$$T_P = t_A + t_t + t_E$$

où $t_A$ = temps d'accès aux informations stockées dans la mémoire,

$t_t$ = temps de comparaison des deux mots binaires (temps de traitement)

$t_E$ = temps d'inscription de nouvelles informations dans la mémoire.

Dans la pratique $t_A = t_E \simeq 40$ ns pour les RAM statiques modernes (30 ns et moins sous peu)

$t_t = 30$ ns (technologie Schotky)

$$\text{Donc } T_P = t_A + t_t + t_E = 40 + 30 + 40 = 110 \text{ ns.}$$

La période d'étude de chacun des points est donc d'une durée de 120 ns correspondant à une fréquence de 8,3 MHz approximativement qui pour un standard de 625 lignes correspond à une définition supérieure aux 500 points par ligne, ce qui est largement suffisant pour exploiter pleinement les informations provenant de la caméra vidéo 1.

Pour les standards à nombre de lignes supérieur, 819, 875 ou 1 249 par exemple, la durée de transmission de chaque point sur l'écran du moniteur TV est inversement proportionnelle au carré du nombre de lignes utilisées et peut être calculée comme suit :

$$T_{p'} \simeq 50 \times 1/n2 \text{ (en nano secondes)}$$

où n = nombre de milliers de lignes appartenant au standard utilisé.

Dans le cas d'un standard de 875 lignes par exemple, nous avons $T_{p'} = 65$ ns ce qui correspond à, environ, une fois et demi le temps d'accès maximum des RAM statiques modernes ne rendant possible que la lecture de la mémoire (ou l'écriture de données), afin de traiter les informations, il est nécessaire d'avoir 110 ns $\simeq$ par point nécessitant de procéder durant le balayage tomographique à l'adressage en sautant un point sur deux en décalant les compteurs d'adressage d'une unité à la fin de la formation de chaque image complète, en revenant à zéro au bout de deux images complètes de manière à disposer d'un temps de 65 ns $\times$ 2 = 130 ns pour le traitement des informations correspondant à chacun des points à analyser. Lors de la lecture de l'image finale l'adressage de l'ensemble mémoire se fait normalement sans jamais sauter aucun point.

Pour un standard 1 249 lignes, il est donc nécessaire de sauter trois points sur quatre lors du traitement des informations.

Il va de soi que le procédé et dispositif peut être adapté à des standards à nombre de lignes plus élevé, à la condition que le temps d'accès des RAM utilisées ne soit pas trop supérieur au temps calculé selon la formule précédente.

Il est d'autre part à noter qu'à tout moment durant le balayage, les données et/ou signaux peuvent être visualisés sur le moniteur de télévision, le résultat partiel ou définitif en fin de balayage peut être stocké de manière connue dans une nouvelle mémoire électronique, dans un vidéo-disque, sur bande magnétique ou sur photographie, l'image finale pouvant rester visualisée indéfiniment et ce jusqu'à un autre balayage tomographique.

Le procédé et dispositif objet de l'invention peut être utilisé dans de nombreux cas autres que des balayages tomographiques, il peut être avantageusement utilisé pour des comparaisons ou visualisation d'images statiques par exemple.

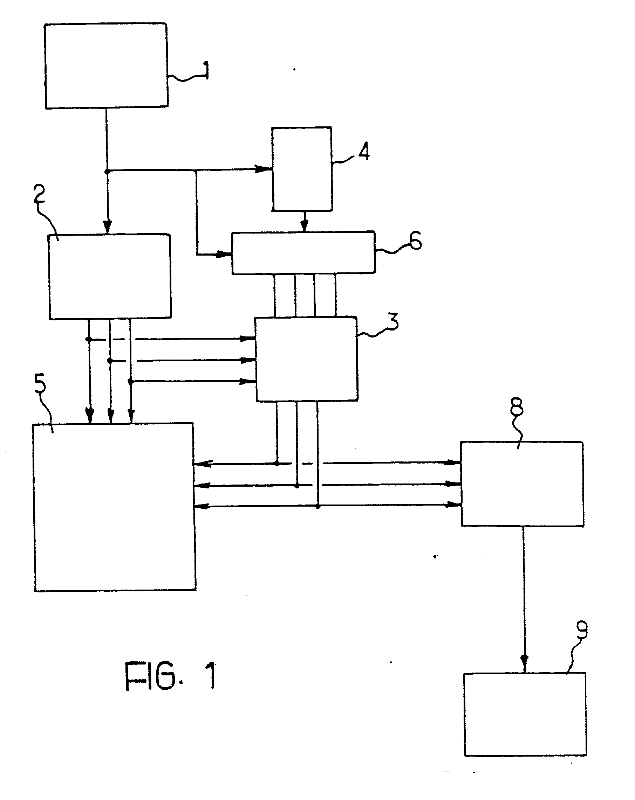

## Revendications

1. Procédé de traitement point par point en temps réel d'images vidéo successives obtenues lors d'un balayage tomographique ou lors d'une visualisation d'images statiques, caractérisé en ce qu'il consiste à comparer au moyen d'un comparateur (5) les signaux d'une image vidéo dont la valeur de brillance de chacun des points a été convertie en signaux numériques affectés de leurs adresses respectives, avec les signaux mémorisés dans une cellule mémoire (3) issus et sélectionnés d'images précédentes afin qu'après chaque comparaison, seulement le signal présentant l'amplitude vidéo la plus élevée soit conservé et mémorisé à la même adresse et ce, image par image, jusqu'à la fin de l'ensemble des balayages de manière à obtenir après reconversion des signaux mémorisés en signaux vidéo une image au travers d'un moniteur de télévision d'une résolution densitométrique de bonne qualité pendant et après lesdits balayages.

2. Dispositif de traitement point par point en temps réel d'images vidéo obtenues au cours d'un balayage tomographique ou au cours d'une visualisation d'images statiques selon le procédé de la revendication 1, caractérisé en ce qu'il comporte un convertisseur vidéo digital instantané (2) convertissant les signaux vidéo de la caméra (1) en signaux numériques, lesdits signaux étant présentés

**0 113 012**

au fur et à mesure à un comparateur (5) en même temps que les signaux d'images précédentes, sélectionnés à leur adresse respective et mémorisés dans une cellule mémoire (3), l'adressage de chaque signal mémorisé correspondant à chaque signal issu de la caméra étant obtenu à l'aide d'un compteur numérique (6) commandé par un oscillateur pilote (4) synchronisé par les tops de synchronisation du signal vidéo de telle sorte que pour chaque signal comparé, celui qui présente la plus forte amplitude vidéo soit mémorisé en attendant une nouvelle comparaison, les signaux mémorisés après ou pendant le balayage après reconversion par un convertisseur digital analogique (8) étant visualisés sur un moniteur de télévision (9).

3. Dispositif de traitement point par point en temps réel d'images vidéo selon la revendication 2, caractérisé en ce que les signaux numériques sont répartis dans la cellule mémoire (3) selon un découpage tel que le nombre de points vidéo de chaque ligne soit sensiblement égal au nombre de lignes analysées par image.

4. Dispositif de traitement point par point en temps réel d'images vidéo selon les revendications 2 et 3, caractérisé en ce que selon le temps de prise en compte et de traitement des signaux définis par des RAM utilisées et les standards 625, 819, 875, 1 249 lignes, etc... les signaux successifs sont traités instantanément à la suite les uns des autres ou selon un décalage par image successive d'un signal sur deux, trois ou quatre, les signaux ayant été sautés étant traités lors du passage de la deuxième image lorsque le décalage est un sur deux, la deuxième et troisième pour un décalage de un sur trois, la deuxième, troisième et quatrième pour un décalage de un sur quatre, toutefois le nombre de signaux mémorisés étant toujours égal au nombre de points correspondant au standard utilisé.

**Claims**

1. Method for the point-by-point processing in real time of video pictures obtained during the tomographic scanning or during a visualisation of static images characterised in that it consists in comparing with the aid of a comparator (5) the signals of a video picture of which the brilliance value of each of the points has been converted into numerical signals to which their respective addressed have been allocated with the signals stored in a storage cell (3) derived and selected from preceding pictures so that after each comparison only the signal representing the largest video amplitude be retained and stored at the same address, proceeding in this manner picture by picture until the conclusion of the scannings in order to obtain, after reconversion of the stored signals to video signals, a picture through a television monitor of good densitometric resolution during and after the said scannings.

2. A device for the point-by-point processing in real time of video pictures obtained during a tomographic scanning or during a visualisation of static pictures according to the process described in Claim 1, characterised in that it comprises an instantaneous digital video converter (2) converting the video signals of the camera (1) to numerical signals, the said signals being presented progressively to a comparator (5) at the same time as the signals of preceding pictures selected at their respective address and stored in a storage cell (3), addressing of each signal stored in accordance with each signal derived from the camera being achieved with the aid of a numerical counter (6) controlled by a pilot oscillator (4) synchronised by the synchronisation signals of the video signal in such a way that for each signal compared the one presenting the largest video amplitude be stored while awaiting a new comparison, the signals stored after or during the scanning being visualised after reconversion by an analogue digital converter (8) on a television monitor (9).

3. A device for the point-by-point processing in real time of video pictures in accordance with Claim 2, characterised in that the numerical signals are distributed in the storage cell (3) according to such a cut that the number of video points of each line be substantially equal to the number of lines per picture analysed.

4. A device for the point-by-point processing in real time of video pictures in accordance with Claims 2 and 3, characterised in that according to the time of consideration and processing of signals defined by RAMs used and the standards 625, 819, 875, 1 249 lines etc... the successive signals are processed instantaneously in succession or in accordance with a displacement for each successive picture of one signal in two, three or four, the signals having been displaced being processed during the passage of the second picture when the displacement amounts to one in two, the second and the third with a displacement of one in three, the second, third and fourth with a displacement of one in four, the number of signals stored being however always equal to the number of points corresponding to the standard in use.

**Patentansprüche**

1. Ein Verfahren für Punkt-zu-Punkt-Verarbeitung in Echtzeit von aufeinanderfolgenden während einer tomographischen Abtastung oder während einer Darstellung statischer Bilder erhaltenen Videobildern, dadurch gekennzeichnet, daß es im Vergleich mit Hilfe einer Vergleichsstufe (5) der Signale eines Videobildes, bei dem der Helligkeitswert jedes Punktes in numerische Signale mit den entsprechenden

4

zugeordneten Adressen umgewandelt wurde, mit den in einer Speicherzelle (3) gespeicherten Signalen, die aus vorhergehenden Bildern hervorgehen und ausgewählt wurden, besteht, so daß bei jedem Vergleich nur das der größten Videoamplitude entsprechende Signal beibehalten und an der gleichen Adresse gespeichert wird, wobei sich dieser Vorgang Bild für Bild bis zum Abschluß der Abtastungen fortsetzt, so daß nach Rückwandlung der gespeicherten Signale in Videosignale während und nach den besagten Abtastungen ein Bild durch einen Fernsehmonitor guter densitometrischer Auflösung anfällt.

2. Ein Gerät für Punkt-zu-Punkt-Verarbeitung in Echtzeit von während einer tomographischen Abtastung oder während einer Darstellung statischer Bilder im Einklang mit dem in Anspruch 1 beschriebenen Verfahren erhaltenen Videobildern, dadurch gekennzeichnet, daß es einen momentan wirkenden digitalen Videoumformer (2) umfaßt, der die Videosignale der Kamera (1) in numerische Signale umwandelt, wobei die besagten Signale nach und nach gleichzeitig mit den Signalen vorhergehender Bilder, die an der entsprechenden Adresse ausgewählt und in einer Speicherzelle (3) gespeichert wurden, einer Vergleichsstufe (5) zugehen, wobei die Adressierung jedes gespeicherten Signals im Einklang mit jedem von der Kamera abgegebenen Signal mit Hilfe eines durch einen Steueroszillator (4) gesteuerten numerischen Zählers (6) bewirkt wird, wobei der besagte Steueroszillator durch die Synchronisationssignale des Videosignals synchronisiert wird, so daß bei jedem verglichenen Signal dasjenige, das die größte Videoamplitude aufweist, während des Abwartens eines weiteren Vergleiches gespeichert wird, wobei die nach oder während der Abtastung gespeicherten Signale nach Rückwandlung durch einen analogen Digitalumformer (8) an einem Fernsehmonitor (9) dargestellt werden.

3. Ein Gerät für Punkt-zu-Punkt-Verarbeitung in Echtzeit von Videobildern im Einklang mit Anspruch 2, dadurch gekennzeichnet, daß die numerischen Signale in der Speicherzelle (3) im Einklang mit einem Schnitt so verteilt sind, daß die Anzahl der Videopunkte jeder Zeile im wesentlichen der Anzahl der je Bild analysierten Zeilen gleicht.

4. Ein Gerät für Punkt-zu-Punkt-Verarbeitung in Echtzeit von Videobildern im Einklang mit den Ansprüchen 2 und 3, dadurch gekennzeichnet, daß je nach der Zeit der Inbetrachtnahme und Verarbeitung von durch benutzte RAMs und die Normen 625, 819, 875, 1 249 Zeilen usw... definierter Signale die aufeinanderfolgenden Signale augenblicklich nacheinander oder gemäß einer Verschiebung je aufeinanderfolgendes Bild um ein Signal in zwei, drei oder vier verarbeitet werden, wobei die verschobenen Signale während des Durchgangs des zweiten Bildes verarbeitet werden, in welchem Falle die Verschiebung eins in zwei beträgt, bzw. des zweiten und dritten bei einer Verschiebung von eins in drei, des zweiten, dritten und vierten bei einer Verschiebung von eins in vier, jedoch stets so, daß die Anzahl der gespeicherten Signale immer der Anzahl von Punkten gemäß der benutzten Norm entspricht.

FIG. 1

0 113 012